# EUROPÄISCHE PATENTANMELDUNG

(11) **EP 2 027 973 A2**
(43) Veröffentlichungstag der Anmeldung: **25.02.2009**
(21) Anmeldenummer: 08104779.7
(22) Anmeldetag: 17.07.2008
(51) Int. Cl.: B25D 17/08, B23Q 3/12

(54) **Wechselbare Werkzeugaufnahme**

(30) Priorität: 20.08.2007 DE 102007000453
(71) Anmelder: HILTI Aktiengesellschaft, 9494 Schaan (LI)
(72) Erfinder: Haas, Günther, 86916 Kaufering (DE)
(74) Vertreter: Wildi, Roland

(57) **Zusammenfassung**

Eine wechselbare Werkzeugaufnahme (1) für eine zumindest teilweise axial schlagende Handwerkzeugmaschine (3) mit zumindest einer gegen eine Federkraft axial versetzbare Entriegelungshülse (4) mit einem innenliegenden Verriegelungsmittel (11) zur radial formschlüssigen Verriegelung der Werkzeugaufnahme mittels Verriegelungselementen (12), welche durch Öffnungen (13) des Grundkörpers (6) der Werkzeugaufnahme in zugeordnete Ausnehmungen (14) der Werkzeugspindel (15) eingreifen, wobei die Entriegelungshülse (4) eine formschlüssige Versetzungsführung (5) bezüglich des Grundkörpers (6) aufweist, welche entlang ihrer Axialersteckung eine tangentiale Abwicklung aufweist.

## Beschreibung

Die Erfindung bezeichnet eine wechselbare Werkzeugaufnahme für eine zumindest teilweise schlagende Handwerkzeugmaschine, wie einen Kombihammer oder einen Meisselhammer.

Wechselbare Werkzeugaufnahmen sind üblicherweise über, mittels einer von Hand versetzbaren Entriegelungshülse radial begrenzt versetzbare, Verriegelungselemente wie Kugeln, welche durch Öffnungen des Grundkörpers der Werkzeugaufnahme in zugeordnete Ausnehmungen der Werkzeugspindel eingreifen, werkzeuglos lösbar und somit von Hand wechselbar verbunden. Im Inneren der teilweise drehend antreibenden Werkzeugspindel wird der Schläger des Schlagwerks axial begrenzt beweglich geführt, welcher direkt auf das Schlagwerkzeug schlägt. Neben dieser maschinenseitigen Entriegelungshülse ist üblicherweise noch eine von Hand versetzbare werkzeugseitige Entriegelungshülse zur Verriegelung des aufgenommenen Schlagwerkzeugs vorhanden.

Nach der US4824298 bildet die maschinenseitige Entriegelungshülse eine händisch tangential versetzbare Drehverriegelung für die Kugeln aus, indem das innenliegende, ringförmige Verriegelungsmittel eine umlaufend radial variierende Verriegelungskulisse ausbildet.

Nach der DE102004042465 weist eine wechselbare Werkzeugaufnahme eine werkzeugseitige Entriegelungshülse und eine maschinenseitig gegen eine Federkraft händisch axial versetzbare, maschinenseitige Entriegelungshülse mit einem innenliegenden ringförmigen Verriegelungsmittel zur radial formschlüssigen Verriegelung der Werkzeugaufnahme mittels Kugeln auf, welche durch Öffnungen des Grundkörpers der Werkzeugaufnahme in zugeordnete Ausnehmungen der Werkzeugspindel eingreifen. Insbesondere bei leistungsstarken Handwerkzeugmaschinen im Leerschlagfall ist die Verriegelung der Kugel durch die bei schlagender Beanspruchung entstehenden Trägheitskräfte, welche zu starken axialen Vibrationen der Entriegelungshülse führen, nicht sicher gegeben. Eine Verstärkung der die maschinenseitige Entriegelungshülse vorspannenden Feder ist hingegen durch die Nutzerakzeptanz begrenzt.

Die Aufgabe besteht in der Realisierung einer an der antreibenden Werkzeugspindel auch bei hoher Schlagbeanspruchung sicher verriegelnden Entriegelungshülse.

Die Aufgabe wird im Wesentlichen durch die Merkmale des Anspruchs 1 gelöst. Vorteilhafte Weiterbildungen ergeben sich aus den Unteransprüchen.

So weist eine wechselbare Werkzeugaufnahme für eine zumindest teilweise axial schlagende Handwerkzeugmaschine zumindest eine gegen eine Federkraft axial versetzbare Entriegelungshülse mit einem innenliegenden Verriegelungsmittel zur radial formschlüssigen Verriegelung der Werkzeugaufnahme mittels Verriegelungselemente auf, welche durch Öffnungen des Grundkörpers der Werkzeugaufnahme in zugeordnete Ausnehmungen der Werkzeugspindel eingreifen, wobei die mit dem Verriegelungsmittel verbundene Entriegelungshülse eine formschlüssige Versetzungsführung bezüglich des Grundkörpers aufweist, welche entlang ihrer Axialersteckung eine tangentiale Abwicklung aufweist.

Durch die entlang ihrer Axialersteckung eine tangentiale Abwicklung aufweisende Versetzungsführung muss zur Entriegelung der Werkzeugaufnahme die Entriegelungshülse in hintereinander ausgeführten Schritten sowohl axial als auch tangential versetzt werden. Da selbst unter der Annahme einer sowohl drehenden als auch schlagenden stochastischen Vibrationserregung, die ohne Versetzungsführung eine hinreichende Versetzung der Entriegelungshülse von der Verriegelungsposition in die axial und tangential versetzte Entriegelungsposition gestatten würde, reicht diese Vibrationserregung bei einer Versetzungsführung nicht aus, da eine axial und tangential versetzte geradlinige Vibrationserregung durch die Versetzungsführung gedämpft wird. Eine zeitlich benachbarte reine axiale und reine tangentiale Vibrationserregung jeweils hinreichender Versetzung ist hingegen durch die sich aus der statistischen Unabhängigkeit beider Vibrationserregungen ergebende bedingte Wahrscheinlichkeit ausgeschlossen, die praktisch null ist.

Vorteilhaft ist die Versetzungsführung als Zapfen-Schlitz-Führung ausgebildet, wobei ein radial auskragender Zapfen formschlüssig längs der Kontur eines radial ausgenommenen oder offenen Schlitzes geführt wird, wodurch eine robuste Versetzungsführung realisiert ist.

Vorteilhaft ist der Zapfen auf einer fest mit dem Grundkörper verbundenen, zur Entriegelungshülse maschinenseitig benachbarten Griffhülse angeordnet, die zumindest teilweise axial in die Entriegelungshülse koaxial innenliegend eingreift, die den zugeordneten Schlitz aufweist, wodurch eine technologisch einfache Versetzungsführung realisiert ist, die spritzgusstechnisch herstellbar ist.

Vorteilhaft ist der Zapfen zugeordnet L-förmig ausgebildet sowie in der Entriegelungsposition vermittelt durch die Vorspannung in dem axial und tangential abgewinkelten Schlitz selbstarretierend, wodurch das Wechseln der Werkzeugaufnahme ohne weiteren händischen Kraftaufwand möglich ist.

Vorteilhaft weist die Griffhülse radial aussen eine umlaufende Fingernut auf, wodurch die Griffhülse durch die Finger der betätigenden Hand ergonomisch greifbar ist, um die werkzeugseitig benachbarte Entriegelungshülse gegenüber dieser zu versetzen.

Vorteilhaft weist die Entriegelungshülse zusätzlich innenliegende Werkzeugverriegelungsmittel zur Verriegelung des aufgenommenen Schlagwerkzeugs auf, wodurch die Handhabung der Werkzeugaufnahme intuitiv wird, indem die Entriegelung des Werkzeugs nur einen Teilschritt (nur axiale Versetzung) der Entriegelung der Werkzeugaufnahme (axiale und anschliessende tangentiale Versetzung) darstellt.

Die Erfindung wird bezüglich eines vorteilhaften Ausführungsbeispiels näher erläutert mit:
Fig. 1 als wechselbare Werkzeugaufnahme in Verriegelungsposition
Fig. 2 in Entriegelungsposition
Fig. 3 als Längsschnitt in Entriegelungsposition

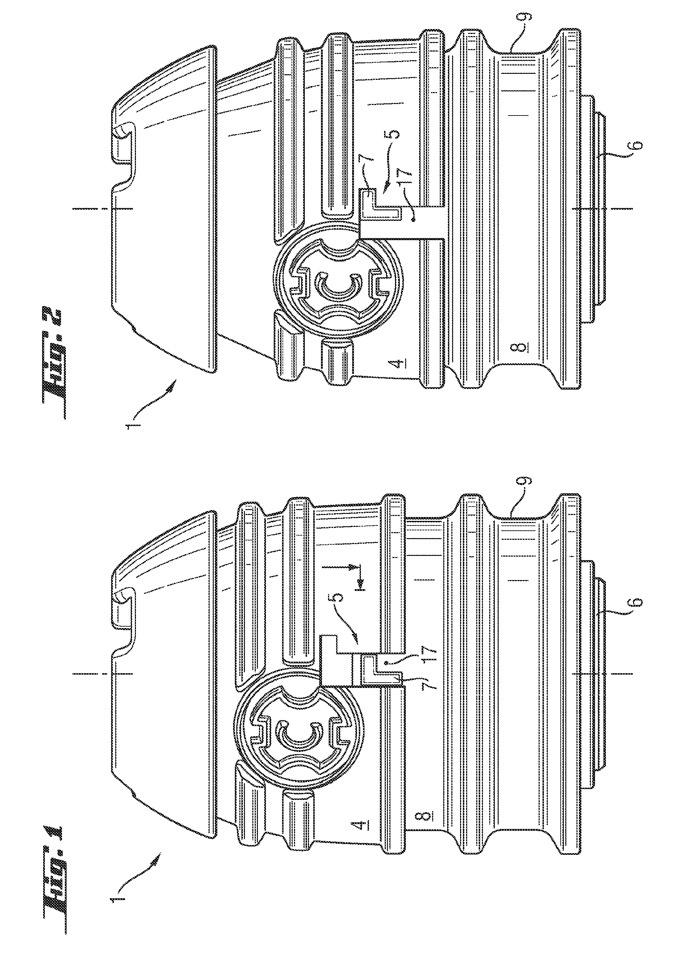

Nach Fig. 1 weist eine wechselbare Werkzeugaufnahme 1 eine Entriegelungshülse 4, welche eine formschlüssige Versetzungsführung 5 bezüglich des Grundkörpers 6 aufweist, welche entlang ihrer Axialersteckung eine tangentiale Abwicklung aufweist. Die Versetzungsführung 5 ist als Zapfen-Schlitz-Führung ausgebildet, wobei ein radial auskragender Zapfen 7 formschlüssig längs der Kontur eines radial offenen Schlitzes 17 geführt wird. Dabei ist der Zapfen 7 auf einer fest mit dem Grundkörper 6 verbundenen, zur Entriegelungshülse 4 maschinenseitig benachbarten Griffhülse 8 angeordnet, die teilweise axial in die Entriegelungshülse 4 koaxial innenliegend eingreift, welche den zugeordneten Schlitz 17 aufweist. Weiter weist die Griffhülse 8 eine radial aussen umlaufende Fingernut 9 auf.

Nach Fig. 2 ist der Zapfen 7 zugeordnet winkelförmig ausgebildet, der in der Entriegelungsposition vermittelt durch die axiale Vorspannung in dem tangentialen Teil des Schlitzes 17 selbstarretierend ist.

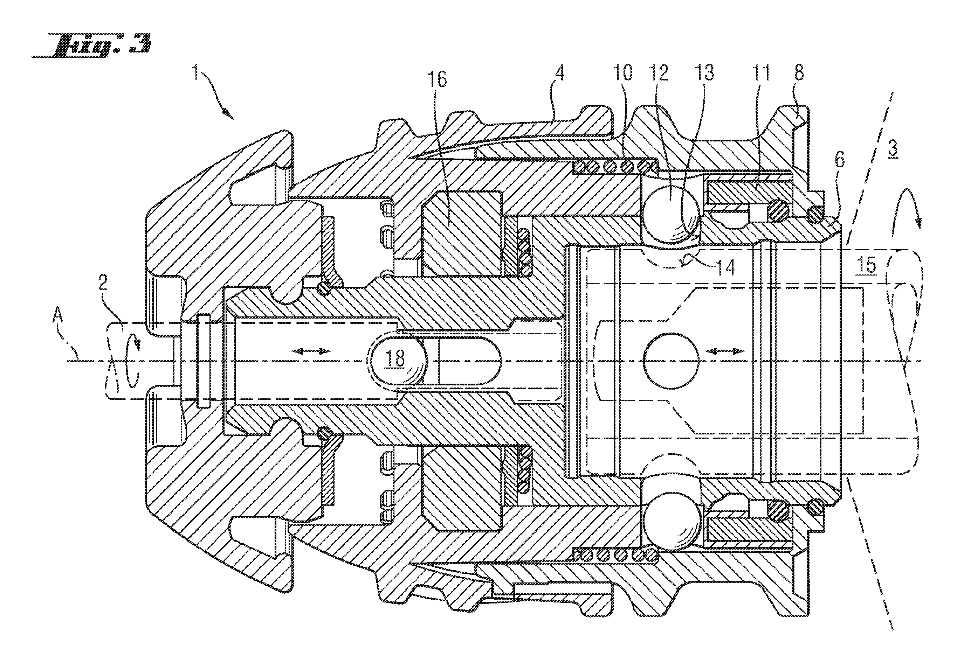

Nach Fig. 3 ist bei der Werkzeugaufnahme 1 für eine längs einer Achse A auf ein Schlagwerkzeug 2 schlagende Handwerkzeugmaschine 3 die Entriegelungshülse 4 gegen eine Federkraft einer Schraubenfeder 10 axial bezüglich der Griffhülse 8 versetzbar, welche selbst fest mit dem Grundkörper 6 verbunden ist. Die Entriegelungshülse 4 weist ein innenliegendes ringförmiges Verriegelungsmittel 11 zur radial formschlüssigen Verriegelung der Werkzeugaufnahme 1 mittels Verriegelungselementen 12 in Form von Kugeln auf, welche in Öffnungen 13 des Grundkörpers 6 radial versetzbar angeordnet sind und in der Verriegelungsposition in zugeordnete Ausnehmungen 14 der drehenden Werkzeugspindel 15 eingreifen. Zusätzlich weist die Entriegelungshülse 4 innenliegende Werkzeugverriegelungsmittel 16 für ein Werkzeugverriegelungselement 18 in Form einer Kugel auf.

Die Handhabung der Werkzeugaufnahme ist intuitiv, indem die Entriegelung des Schlagwerkzeugs nur den Teilschritt der axialen Versetzung (Fig. 1) umfasst, wobei zur Entriegelung der Werkzeugaufnahme zudem eine anschliessende tangentiale Versetzung notwendig ist.

## Patentansprüche

1. Wechselbare Werkzeugaufnahme für eine zumindest teilweise axial schlagende Handwerkzeugmaschine (3) mit zumindest einer gegen eine Federkraft axial versetzbare Entriegelungshülse (4) mit einem innenliegenden Verriegelungsmittel (11) zur radial formschlüssigen Verriegelung der Werkzeugaufnahme mittels Verriegelungselementen (12), welche durch Öffnungen (13) des Grundkörpers (6) der Werkzeugaufnahme in zugeordnete Ausnehmungen (14) der Werkzeugspindel (15) eingreifen, **dadurch gekennzeichnet, dass** die Entriegelungshülse (4) eine formschlüssige Versetzungsführung (5) bezüglich des Grundkörpers (6) aufweist, welche entlang ihrer Axialersteckung eine tangentiale Abwicklung aufweist.

2. Werkzeugaufnahme nach Anspruch 1, **dadurch gekennzeichnet, dass** die Versetzungsführung (5) als Zapfen-Schlitz-Führung ausgebildet ist, wobei ein radial auskragender Zapfen (7) formschlüssig längs der Kontur eines Schlitzes (17) geführt wird.

3. Werkzeugaufnahme nach Anspruch 2, **dadurch gekennzeichnet, dass** der Zapfen (7) auf einer fest mit dem Grundkörper (6) verbundenen, zur Entriegelungshülse (4) maschinenseitig benachbarten Griffhülse (8) angeordnet ist, die zumindest teilweise axial in die Entriegelungshülse (4) koaxial innenliegend eingreift, die den zugeordneten Schlitz (17) aufweist.

4. Werkzeugaufnahme nach Anspruch 2 oder 3, **dadurch gekennzeichnet, dass** der Zapfen (7) L-förmig ausgebildet und in der Entriegelungsposition in der Abwinklung des Schlitzes (17) selbstarretierend ist.

5. Werkzeugaufnahme nach einem der Ansprüche 1 bis 4, **dadurch gekennzeichnet, dass** die Griffhülse (8) radial aussen eine umlaufende Fingernut (9) aufweist.

6. Werkzeugaufnahme nach einem der Ansprüche 1 bis 5, **dadurch gekennzeichnet, dass** die Entriegelungshülse (4) zusätzlich innenliegende Werkzeugverriegelungsmittel (16) zur Verriegelung des aufgenommenen Schlagwerkzeugs (2) aufweist.
